# EUROPEAN PATENT APPLICATION

(11) **EP 4 800 355 A1**
(43) Date of publication of application: **02.09.2026**
(21) Application number: 25161089.5
(22) Date of filing: 28.02.2025
(51) Int. Cl.: G01C 21/16

(54) **POSE ESTIMATION**

(71) Applicant: Nokia Solutions and Networks Oy, 02610 Espoo (FI); Institut National de Recherche en Informatique et en Automatique, 78150 Rocquencourt (FR)
(72) Inventor: KHALILI, Mata, Massy (FR); LIU, Shiyu, Massy (FR); EFIMOV, Denis, Villeneuve-d'Ascq (FR)
(74) Representative: Richardt Patentanwälte PartG mbB

(57) **Abstract**

The present subject matter relates to a method comprising using a first motion model of motion of a mobile device to determine a current state, referred to as a first state estimate, of the mobile device using a primary pose estimate of the mobile device; determining at least one of: a secondary pose estimate of the mobile device using first sensor measurements or a first reference state estimate using a reference motion model and the primary pose estimate; determining a first estimation error of the first state estimate using at least one of: the secondary pose estimate or the first reference state estimate; and based on the first estimation error: triggering an update of the primary pose estimate for using the updated primary pose estimate for a next execution of the method.

## Description

### TECHNICAL FIELD

Various example embodiments relate to positioning, and more particularly to a system for updating pose estimates in localization systems.

### BACKGROUND

Positioning and motion control in autonomous systems may involve estimating a current state of a mobile device and generating movement commands to reach a desired goal efficiently and accurately. This process may rely on sensor data to determine the device's pose and correct deviations from a motion plan. A motion planner may compute a feasible path based on a latest pose estimate, considering environmental constraints and kinematic limitations. The motion plan may be updated as new localization data becomes available, ensuring smooth and adaptive navigation. However, this process can be computationally and transmission-intensive.

### SUMMARY

Example embodiments provide a system comprising an apparatus, referred to as first apparatus, the first apparatus comprising at least one processor; and at least one memory storing instructions that, when executed by the at least one processor, cause the first apparatus to perform a first positioning operation comprising: use a first motion model of motion of a mobile device to determine a current state, referred to as a first state estimate, of the mobile device using a primary pose estimate of the mobile device; determine at least one of: a secondary pose estimate of the mobile device using first sensor measurements regarding the mobile device or a first reference state estimate of the mobile device using a reference motion model and the primary pose estimate; determine a first estimation error of the first state estimate using at least one of: the secondary pose estimate or the first reference state estimate; and based on the first estimation error: trigger an update of the primary pose estimate for using the updated primary pose estimate for a next execution of the first positioning operation.

Example embodiments provide a method comprising using a first motion model of motion of a mobile device to determine a current state, referred to as a first state estimate, of the mobile device using a primary pose estimate of the mobile device; determining at least one of: a secondary pose estimate of the mobile device using first sensor measurements or a first reference state estimate using a reference motion model and the primary pose estimate; determining a first estimation error of the first state estimate using at least one of: the secondary pose estimate or the first reference state estimate; and based on the first estimation error: triggering an update of the primary pose estimate for using the updated primary pose estimate for a next execution of the method.

Example embodiments provide a computer program product comprising processor executable instructions for causing an apparatus for performing at least the method.

Example embodiments provide a non-transitory computer readable medium comprising program instructions that, when executed by an apparatus, cause the apparatus to perform at least the method.

"First," "second," etc. as used herein, these terms are used as labels for nouns that they precede, and do not imply any type of ordering (e.g., spatial, temporal, logical) unless explicitly defined as such.

### BRIEF DESCRIPTION OF THE DRAWINGS

The accompanying figures are included to provide a further understanding of examples, and are incorporated in and constitute part of this specification. In the figures:
FIG. 1 is a block diagram of a system for localization according to an example of the present subject matter;
FIG. 2 is a process flowchart illustrating a method for updating a primary pose estimate according to an example of the present subject matter;
FIG. 3 is a process flowchart illustrating a method for updating a primary pose estimate according to an example of the present subject matter;
FIG. 4 is a process flowchart illustrating a method for updating a primary pose estimate according to an example of the present subject matter;
FIG. 5A illustrates a cloud-based localization system in accordance with an example of the present subject matter;
FIG. 5B illustrates a workflow diagram detailing how the cloud-based localization system of FIG. 5A processes pose estimation updates in accordance with an example of the present subject matter;
FIG. 6A illustrates a cloud-based localization system in accordance with an example of the present subject matter;
FIG. 6B illustrates a workflow diagram detailing how the cloud-based localization system of FIG. 6A processes pose estimation updates in accordance with an example of the present subject matter;
FIG. 7A illustrates a cloud-based localization system in accordance with an example of the present subject matter;
FIG. 7B illustrates a workflow diagram detailing how the cloud-based localization system of FIG. 7A processes pose estimation updates in accordance with an example of the present subject matter;
FIG. 7C illustrates a workflow diagram detailing how the cloud-based localization system of FIG. 7A processes pose estimation updates in accordance with an example of the present subject matter;
FIG. 8A illustrates a cloud-based localization system in accordance with an example of the present subject matter;
FIG. 8B illustrates a workflow diagram detailing how the cloud-based localization system of FIG. 8A processes pose estimation updates in accordance with an example of the present subject matter;
FIG. 9 illustrates a workflow diagram detailing how the cloud-based localization system provides pose estimation drifts using a data driven model in accordance with an example of the present subject matter; and
FIG. 10 is a block diagram illustrating an example apparatus according to the present subject matter.

### DETAILED DESCRIPTION

In the following description, for purposes of explanation and not limitation, specific details are set forth such as particular architectures, interfaces, techniques, etc., in order to provide a thorough understanding of the examples. However, it will be apparent to those skilled in the art that the disclosed subject matter may be practiced in other illustrative examples that depart from these specific details. In some instances, detailed descriptions of well-known devices and/or methods are omitted so as not to obscure the description with unnecessary detail.

The present subject matter may reduce traffic transfer while maintaining accurate localization by dynamically updating the primary pose estimate only when necessary, based on controlled determination of errors. By using predefined error conditions, the system can optimize energy consumption and processing load, ensuring that localization updates occur efficiently and only when needed. This approach may enhance scalability and adaptability, making it highly suitable for real-time autonomous navigation, industrial automation, and loT-based mobile tracking applications, where low-latency, high-accuracy positioning may be essential while minimizing unnecessary data transmissions and computational overhead.

A system may be provided to enable accurate positioning of a mobile device while maintaining efficiency. The system may support the implementation of localization systems or be integrated into existing localization systems to enhance position estimation, motion tracking, and state determination. Specifically, the present subject matter may allow for an accurate and controlled update or refinement of a primary pose estimate of the mobile device. The primary pose estimate may refer to a pose of the mobile device, representing its position and orientation in a given reference frame. The reference frame may be a global coordinate system (e.g., a world frame, geographic coordinate system, or an inertial frame) or a local coordinate system (e.g., a mobile device-centric frame, map-relative frame, or an environment-specific reference). The term "estimate" as used herein is not meant to imply inaccuracy but rather reflects the fact that positioning relies on sensor data, motion models, or computational techniques, which may involve approximations or corrections based on available measurements. Accordingly, a pose estimate may refer to a pose, representing the position and orientation of the mobile device, while a state estimate may refer to a state, which may include additional motion parameters such as velocity and acceleration. The term primary pose estimate may be used to indicate its role as a starting point of a motion plan of the mobile device. That is, the mobile device may use the primary pose estimate as provided e.g., by a localization system, in order to perform motion control and motion planning of the mobile device. The primary pose estimate may be provided by the system or be received from another system that performs localization or state estimation. In the latter case, the system may function as a controller that determines time instances for updating or redetermining the primary pose estimate, ensuring accurate and timely adjustments to maintain reliable positioning. The primary pose estimate may be determined using sensor data which may be provided by sources referred to as primary sensor sources and using an estimation algorithm which may be referred to as primary algorithm.

The system may be provided with a first apparatus and inputs that may not have been used in the determination of the primary pose estimate but can provide complementary or corrective information to enhance localization accuracy and robustness. The inputs may be provided by additional sensor data sources and/or motion models. This may enable an independent decision process for determining the time instances at which the primary pose estimate is to be updated. In contrast to using the same inputs as the determination of the primary pose estimate, this approach may allow for more adaptive and reliable updates, as it may incorporate diverse data sources to detect deviations or uncertainties that may not have been accounted for in the original estimation. For example, the system may comprise the first apparatus.

The first apparatus may be configured to perform an operation referred to as first positioning operation. The first positioning operation may use as input, referred to as pose input, the primary pose estimate. The first positioning operation may comprise using a first motion model of motion of the mobile device to determine or estimate a current state, referred to as a first state estimate, of the mobile device using the primary pose estimate of the mobile device. The first apparatus may be configured to use the first motion model to estimate the first state estimate using the primary pose estimate of the mobile device. A mobile device may be a system capable of moving within an environment. The mobile device may be equipped with sensors, processing units, and communication interfaces to support tasks such as navigation, localization, and control. The mobile device may include a robot such as a Wheeled Mobile Robot (WMR) and autonomous vehicle. The first motion model may be a motion model. A motion model may, for example, be a mathematical representation of how the mobile device moves over time based on control inputs and a starting condition such as the primary pose estimate. The motion model may predict the state (e.g., future state) of the mobile device using equations that describe its kinematics or dynamics. The state of a device may, for example, comprise at least one of the following: position, orientation, velocity, or acceleration of the device.

The first positioning operation may comprise determining at least one of: a secondary pose estimate of the mobile device using first sensor measurements regarding the mobile device or a first reference state estimate of the mobile device using a reference motion model and the primary pose estimate. The first apparatus may be configured to determine the secondary pose estimate of the mobile device using the first sensor measurements. Additionally, or alternatively, the first apparatus may be configured to determine the first reference state estimate of the mobile device using the reference motion model and the primary pose estimate. The first sensor measurements may refer to sensor data obtained from sources other than or different from at least part of the primary sensor sources used for determining the primary pose estimate, enabling a complementary or independent validation of the mobile device's position and motion. In another example, the first sensor measurements may comprise sensor data obtained from at least part of the primary sensor sources, but the algorithm used to determine the secondary pose estimate from the sensor data may be different from the primary algorithm. The reference motion model may also be referred to as a ground truth motion model because it may serve as a more accurate or validated representation of the mobile device's motion, for example, relying on external corrections, or post-processed estimations.

The first motion model may, for example, be a kinematic model, which describes the motion of the mobile device based on position, velocity, and acceleration without considering external forces, while the reference motion model may be a kinematic model of the mobile device, that incorporates corrections for disturbances, delays, or environmental interactions.

Hence, with the present subject matter, once determined, the primary pose estimate may be supplemented with each instance of execution of the first positioning operation by incorporating the first state estimate and the secondary pose estimate and/or first reference state estimate, providing a more comprehensive and robust representation of the mobile device's position and motion. The first state estimate, the secondary pose estimate, and the first reference state estimate may, for example, be determined for the same time instant with respect to the same reference frame. Alternatively, these estimates may be determined for different time instants and/or different reference frames. In such cases, time alignment mechanisms (e.g., interpolation, extrapolation, or delay compensation techniques) and frame transformations (e.g., coordinate frame conversions, pose re-referencing, or sensor fusion adjustments) may be used so that comparisons may remain accurate, minimizing errors.

The first positioning operation may comprise determining an estimation error, referred to as first estimation error of the first state estimate using at least one of: the secondary pose estimate or the first reference state estimate. The first apparatus may be configured to determine the first estimation error of the first state estimate using the secondary pose estimate. Alternatively, the first apparatus may be configured to determine the first estimation error of the first state estimate using the first reference state estimate. Alternatively, the first apparatus may be configured to determine the first estimation error of the first state estimate using the secondary pose estimate and the first reference state estimate.

For example, the first apparatus may determine the first estimation error of the first state estimate by comparing it with at least one of: the secondary pose estimate or the first reference state estimate. The secondary pose estimate may provide an independent measurement of the mobile device's position, derived from additional sensor data sources, while the first reference state estimate, computed using a different motion model, may offer an alternative prediction of the mobile device's state. By detecting discrepancies between the first state estimate and these independently obtained estimates, the system may quantify localization errors, detect drift, and trigger corrective updates when necessary. This approach may ensure higher reliability and robustness by cross-verifying state estimation against multiple sources.

The first positioning operation may comprise: triggering an update of the primary pose estimate based on the first estimation error. This may result in an updated primary pose estimate. The updated primary pose estimate may, for example, be provided as a pose input to the next execution of the first positioning operation, ensuring continuous refinement of the estimated state. The first apparatus may be configured to trigger the update of the primary pose estimate based on the first estimation error, meaning that the first apparatus may dynamically evaluate discrepancies between the first state estimate and alternative estimates, such as the secondary pose estimate or the first reference state estimate, to determine when an update of the primary pose estimate is necessary. For example, the primary pose estimate update is conditionally triggered, depending on whether the first estimation error fulfills a first triggering condition. The first triggering condition may, for example, require the first estimation error exceeding a predefined threshold. If the first estimation error does not exceed the threshold, no update of the primary pose estimate may be required, allowing the system to conserve computational and communication resources. Conversely, if the first estimation error exceeds the threshold, an update of the primary pose estimate is triggered to improve the accuracy of the first positioning operation. Triggering an update may involve providing current sensor data of the mobile device for performing the update of the primary pose estimate and providing the updated primary pose estimate to the first apparatus. Updating the primary pose estimate may comprise redetermining the primary pose estimate using the provided sensor data. For example, the primary pose estimate may be redetermined using the provided sensor data and the primary algorithm. The updated primary pose estimate may be the current primary pose estimate. The first apparatus may, for example, be configured to maintain only the most recent (current) primary pose estimate which is provided to or by the first apparatus, which may mean that for each execution instance of the first positioning operation, the maintained primary pose estimate is used as input to perform the first positioning operation. Additionally, if the first apparatus is responsible for providing the primary pose estimate to another entity, this maintained primary pose estimate may also be used for that provision.

The updated primary pose estimate may be used as a pose input for the next execution of the first positioning operation.

According to one example, the first apparatus may be configured to repeatedly perform the first positioning operation. The repetition may be performed at predefined time intervals, in response to specific events, or dynamically based on system conditions, until a stopping criterion is met. Such a stopping criterion may include reaching a target location, achieving a predefined localization accuracy, exceeding a maximum number of iterations, or detecting system constraints such as limited computational resources or communication failures. The first apparatus may be configured to repeatedly perform the first positioning operation in accordance with a first frequency. This iterative process may ensure that the system maintains an accurate and reliable state estimate while adapting to environmental and operational constraints.

The present subject matter may further improve the update control of the primary pose estimate by using another apparatus, referred to as the second apparatus. The system may comprise the second apparatus. The first motion model may be implemented as an identical copy in both the first and second apparatuses. The second apparatus is configured to perform a second positioning operation. The second positioning operation may differ from the first positioning operation in the type of sensor data used, the pose input or the update criteria employed. The second positioning operation may implement different update thresholds, allowing for a more adaptive and accurate correction of the primary pose estimate. The second positioning operation may receive as input a primary pose estimate of the mobile device.

The second positioning operation comprises: using the first motion model to determine or estimate a current state, referred to as second state estimate, using a primary pose estimate of the mobile device, determining at least one of: another secondary pose estimate (referred to as the other secondary pose estimate) of the mobile device using second sensor measurements regarding the mobile device or a second reference state estimate of the mobile device using the reference motion model and the primary pose estimate, determining a second estimation error on the second state estimate using at least one of: the other secondary pose estimate or the second reference state estimate; and based on the second estimation error: triggering an update of the primary pose estimate for using the updated primary pose estimate for a next execution of the first positioning operation or the second positioning operation.

The second apparatus may be configured to use the first motion model to estimate the current second state estimate using the primary pose estimate of the mobile device. The second apparatus may be configured to determine the other secondary pose estimate of the mobile device using second sensor measurements regarding the mobile device. Alternatively, or additionally the second apparatus may be configured to determine the second reference state estimate of the mobile device using the reference motion model and the primary pose estimate. The second sensor measurements may refer to sensor data obtained from sources other than or different from at least part of the primary sensor sources used for determining the primary pose estimate, enabling a complementary or independent validation of the mobile device's position and motion. In another example, the second sensor measurements may comprise sensor data obtained from at least part of the primary sensor sources, but the algorithm used to determine the other secondary pose estimate from the sensor data may be different from the primary algorithm and form the algorithm used to determine the secondary pose estimate. The second apparatus may be configured to determine the second estimation error on the second state estimate using the other secondary pose estimate. Alternatively, the second apparatus may be configured to determine the second estimation error on the second state estimate using the second reference state estimate. Alternatively, the second apparatus may be configured to determine the second estimation error on the second state estimate using the other secondary pose estimate and the second reference state estimate. The second apparatus may be configured to trigger the update of the primary pose estimate based on the second estimation error. This may result in an updated primary pose estimate. The updated primary pose estimate may, for example, be provided as a pose input to the next execution of the first positioning operation and/or second positioning operation, ensuring continuous refinement of the estimated state. The second apparatus may be configured to trigger the update of the primary pose estimate based on the second estimation error, meaning that the second apparatus may dynamically evaluate discrepancies between the second state estimate and alternative estimates, such as the other secondary pose estimate or the second reference state estimate, to determine when an update of the primary pose estimate is necessary. For example, the primary pose estimate update is conditionally triggered, depending on whether the second estimation error fulfills a second triggering condition. The second triggering condition may or may not be the same as the first triggering condition. The second triggering condition may, for example, require the second estimation error exceeding a predefined threshold. If the second estimation error does not exceed the threshold, no update of the primary pose estimate may be required, allowing the system to conserve computational and communication resources. Conversely, if the second estimation error exceeds the threshold, an update of the primary pose estimate is triggered to improve positioning accuracy. Triggering an update may involve providing current sensor data of the mobile device for performing the update of the primary pose estimate and providing the updated primary pose estimate to the first apparatus. The updated primary pose estimate may be the current primary pose estimate. The first apparatus may be configured to decide when and whether to forward the current primary pose estimate to the second apparatus.

The second apparatus may, for example, be configured to maintain only the most recent primary pose estimate which is provided to the second apparatus, which may mean that for each execution instance of the second positioning operation, the maintained primary pose estimate is used as input to perform the second positioning operation. Additionally, if the second apparatus is responsible for providing the primary pose estimate to another entity, this maintained primary pose estimate may also be used for that provision.

The second state estimate, the other secondary pose estimate, and second first reference state estimate may, for example, be determined for the same time instant with respect to the same reference frame. Alternatively, these estimates may be determined for different time instants and/or different reference frames. In such cases, time alignment mechanisms (e.g., interpolation, extrapolation, or delay compensation techniques) and frame transformations (e.g., coordinate frame conversions, pose re-referencing, or sensor fusion adjustments) may be used so that comparisons may remain accurate, minimizing errors.

According to one example, the second apparatus may be configured to repeatedly perform the second positioning operation. The repetition may be performed at predefined time intervals, in response to specific events, or dynamically based on system conditions, until a stopping criterion is met. In one example, the second positioning operation may be automatically performed or repeated in response to receiving the pose input which comprises the (current) primary pose estimate from the first apparatus. Such a stopping criterion may include reaching a target location, achieving a predefined localization accuracy, exceeding a maximum number of iterations, or detecting system constraints such as limited computational resources or communication failures. The second apparatus may be configured to repeatedly perform the second positioning operation in accordance with a second frequency, wherein the second frequency may or may not be different from the first frequency. For example, the second frequency may be lower than the first frequency, ensuring that the second positioning operation is executed less often than the first positioning operation. By performing the second positioning operation less frequently, the system can reduce processing overhead, and minimize unnecessary data transfers, while still maintaining accurate localization and state estimation through controlled updates based on predefined conditions, such as error thresholds or environmental changes.

Hence, as defined above, the second positioning operation may differ from the first positioning operation at least in the sensor measurements, algorithms used to determine the secondary pose estimate, and their rate of execution. This may be advantageous as it may allow for a modular and distributed processing approach, where each operation is executed on a different apparatus, enabling parallel execution and efficient workload distribution. By having distinct execution rates, the system can prioritize real-time localization updates through the first positioning operation, while the second positioning operation may run at a different frequency, focusing on error correction, model refinement, or sensor fusion with external data sources.

For example, for each execution instance of the first positioning operation, the following may be performed: if the primary pose estimate is updated, the first apparatus may use the updated primary pose estimate for the next execution of the first positioning operation. However, the updated primary pose estimate of the execution instance may or may not be sent by the first apparatus to the mobile device for motion execution. This distinction may be particularly advantageous because the error analysis performed by the first positioning operation may require higher precision than what is typically needed for the mobile device's motion execution. By decoupling pose estimation for localization from pose usage for motion control, the system may enhance accuracy in state estimation while preventing unnecessary processing overhead or delays in real-time motion execution.

In one example, the updated primary pose estimate of the execution instance may or may not be sent by the first apparatus to the second apparatus. In one example, the first apparatus may be configured to send the updated primary pose estimate to the second apparatus for each execution instance of the first positioning operation, if an update occurs. This may allow the second apparatus to use the updated primary pose estimate as an input for the execution of the second positioning operation. Alternatively, the first apparatus may be configured to send the updated primary pose estimate to the second apparatus under specific conditions, such as when a predefined error threshold is exceeded, when external sensor corrections are incorporated, or at regular intervals based on system requirements.

According to one example, the first apparatus may be configured to: determine whether the primary pose estimate matches the first state estimate, and in response to determining that the primary pose estimate does not match the first state estimate provide the current primary pose estimate to the second apparatus. For example, this process may be part of the first positioning operation. The primary pose estimate that is provided to the second apparatus may be a most recent primary pose estimate that is obtained at the first apparatus. Sending the primary pose estimate to the second apparatus may comprise sending the primary pose estimate to the mobile device.

The primary pose estimate matches the first state estimate may mean that the discrepancy between them is within an acceptable threshold, which may be defined based on position, orientation, or velocity differences. This threshold may account for measurement noise, model uncertainties, and minor deviations that do not significantly impact localization accuracy. If the difference between the primary pose estimate and the first state estimate remains within this threshold, no provision of the current pose estimate may be needed. However, if the discrepancy exceeds the threshold, the primary pose estimate may be provided to the second apparatus. For example, the difference between the position and/or orientation of the first state estimate and the respective position and/or orientation of the primary pose estimate may be evaluated against the threshold. If the positional deviation is within a certain distance threshold and the orientation difference does not exceed a specified angular tolerance, the estimates may be considered consistent.

According to one example, the first apparatus may be configured to: determine whether the primary pose estimate matches the other secondary pose estimate using a data driven model, and in response to determining that the primary pose estimate does not match the other secondary pose estimate, provide a drift between the primary pose estimate and the other secondary pose estimate provided by the data driven model to the second apparatus, thereby triggering the second apparatus to update the primary pose estimate using the drift.

In one example, the data driven model may receive from a localization system (e.g., that provides at least the initial primary pose estimate) or the first apparatus the primary pose estimate and may receive from the second apparatus the other secondary pose estimate. The first apparatus may be configured to request from the data driven model a pose estimation drift at the second apparatus and may receive it, from the data driven model, as an output of the data driven model. The second apparatus may use the received pose estimation drift to update the other secondary pose estimate. The data driven model may thus be used to predict and contribute to reducing the cumulative error of the pose estimation of onboard odometry sensors over time.

Indeed, to further reduce the communication need between the localization system and the mobile device, data-driven models may be employed to learn and predict the drift between the mobile device's secondary pose estimate, which may inherently be less accurate, and the localization system's more precise pose estimation. This drift may be influenced by various factors, including the type of sensors used (e.g., motor encoders, Inertial Measurement Unit (IMU)), the estimation algorithms implemented, the mobile device's velocity, and environmental conditions such as location and surface characteristics encountered during navigation. To achieve this objective, this example may deploy a pre-trained and optimized data-driven model, such as one based on polynomial regression, on the localization system side. Although it may be feasible to host the data-driven model directly on the mobile device, localization system deployment may be preferred due to the superior computational capacity available for continuous training. The data-driven model may be trained using time-stamped pose estimation data from both the mobile device and the localization system, with the potential for continuous training on real-time pose estimates. The data-driven model's output may be an estimation of the drift between the mobile device side pose estimation and the corresponding localization system-side. When transmitting the more accurate pose from the first apparatus to the second apparatus, the data-driven model may also predict the drift between the current and subsequent estimates and sends this data along with the primary pose estimate. The mobile device may then use this additional information, which takes into account its current location, speed, and other parameters, to improve the internal model and refine its local pose estimation, where the internal model refers to the first motion model.

According to one example, the primary pose estimate is obtained by correcting an initial primary pose estimate that is determined from the sensor data, wherein the correction is performed using the velocity of the mobile device and a delay.

This process may, for example, include a correction mechanism that adjusts the primary pose estimate by incorporating the velocity of the mobile device and the delay. The velocity-based correction may account for the fact that during the delay period, the mobile device may continue moving, meaning that the original pose estimate may no longer accurately reflect its true position.

In the case where the primary pose estimate is to be used for the first positioning operation, the delay may comprise a transfer delay of the sensor data to a system (e.g., comprising the first apparatus) where the primary pose estimate is determined, accounting for a delay from the time the sensor data was acquired. In this case, the correction may be referred to as a first correction for the primary pose estimate. In the case where the primary pose estimate is to be used for the second positioning operation or for motion control of the mobile device, the delay may include both the transfer delay of the sensor data and an additional submission delay of the primary pose estimate to the second apparatus. This may account for the time taken to send the corrected pose estimate for further processing or use at the second apparatus. In this case, the correction may be referred to as a second correction for the primary pose estimate.

In one example, the pose input of the first positioning operation may already have the first correction applied, meaning that the primary pose estimate has been preadjusted using the velocity of the mobile device and the transfer delay before being used in the positioning operation. Alternatively, the first apparatus may receive the initially determined primary pose estimate and subsequently perform the first correction, ensuring that the resulting primary pose estimate accurately accounts for the transfer delay. This corrected estimate may then be used as the pose input for the first positioning operation, improving the accuracy of state estimation. In one example, the submission of the updated primary pose estimate by the first apparatus to the second apparatus may include the first apparatus performing the second correction, which further accounts for an additional submission delay before sending the resulting primary pose estimate to the second apparatus. This may ensure that the second apparatus receives a time-adjusted primary pose estimate, compensating for any latency introduced during transmission, thereby enhancing synchronization, motion control precision, and localization reliability. Alternatively, the first apparatus may receive the primary pose estimate, which may comprise two individual primary pose estimates: a primary pose estimate that already has the first correction applied, which is used as the pose input for the first positioning operation, and another primary pose estimate that already has the second correction applied, which may be sent by the first apparatus to the second apparatus for use in the second positioning operation.

This correction may be applied in cases where the first and second apparatuses are remotely connected and the mobile device is moving while the pose estimate is still being processed and/or transmitted. In cases where the first and second apparatuses are collocated, the initially determined primary pose estimate may already be sufficiently synchronized, as latency is minimal due to the absence of network-induced delays. In such scenarios, the first and second corrections may not be applied.

According to one example, the first motion model is adapted for using a first control input of the mobile device for the estimation of the first state estimate, and the reference motion model is adapted for using a second control input of the mobile device for the estimation of the first reference state estimate, wherein the first control input is different from the second control input. The term control input refers to the set of parameters influencing the motion of the mobile device, such as velocity, acceleration, or steering commands. The first control input may have an accuracy different from (e.g., worse than) an accuracy of the second control input. For example, the first control input may be less accurate compared to the second control input, meaning that it may be affected by execution uncertainties, actuator limitations, or external disturbances. In contrast, the second control input may represent a refined or corrected version that may account for compensation mechanisms, model adjustments, or externally optimized control signals, thereby providing a more accurate basis for estimating the first reference state estimate. By utilizing different control inputs for state estimation, the system can detect inconsistencies and improve robustness against errors in the applied motion commands. In one example, the first control input may comprise the linear velocity and angular velocity of the mobile device, while the second control input may comprise the linear velocity, angular velocity, and additional disturbance parameters, such as external forces or model corrections. The inclusion of disturbances in the second control input may allow the reference motion model to compensate for real-world uncertainties, providing a more accurate reference state estimate compared to the first state estimate based solely on the first control input.

According to one example, the first sensor measurements are different from the second sensor measurements, wherein the first sensor measurements comprise external sensor measurements and the second sensor measurements comprise odometry measurements. Indeed, the first sensor measurements are different from the second sensor measurements, wherein the first sensor measurements comprise external sensor measurements, such as data obtained from Global Positioning System (GPS), Light Detection and Ranging (LIDAR), cameras, or other external localization sources, while the second sensor measurements comprise odometry measurements, including data derived from wheel encoders, inertial sensors, or motor feedback that estimate motion based on the mobile device's internal movement.

The primary sensor sources may comprise the sensors initially used to determine the primary pose estimate of the mobile device, for example, combining onboard and external sensors to establish a baseline for localization. For example, in an autonomous vehicle, the primary sensor sources may include GPS for absolute positioning, IMU for detecting movement and orientation, and wheel speed sensors for velocity estimation. These primary sensor sources may differ from sources of the first and second sensor measurements, which may introduce additional or alternative data, such as external tracking systems (e.g., GPS, fixed cameras) or odometry-based corrections (e.g., motor feedback, additional IMU data). This distinction may allow for error detection and correction, ensuring a more robust and adaptive localization system.

According to one example, the first apparatus is configured to be remotely connected to the second apparatus. According to one example, alternatively the first apparatus is configured to be collocated with the second apparatus.

The first apparatus and the second apparatus may be either remotely connected or collocated. In the remote connection scenario, the first apparatus may be part of a processing system that is remote from the second apparatus, where the second apparatus may be part of the mobile device. The processing system may, for example, comprise cloud-based computing resources, edge computing infrastructure, or a dedicated remote server that may be configured to perform high-precision localization, motion modeling, and data fusion. This setup may enable offloading computationally intensive tasks from the mobile device, allowing it to function with lower power consumption and reduced onboard processing requirements. This approach may also enhance scalability, and allow integration with external localization infrastructure (e.g., GPS networks, real-time mapping systems). However, it may rely on network stability and low-latency communication for real-time updates. In contrast, when the first and second apparatuses are collocated (e.g., both operate within the same physical system, such as a mobile device's onboard computing unit), data exchange may occur without transmission delays, ensuring faster and more reliable positioning updates. This setup may be resilient to connectivity issues and provide real-time adaptability, particularly in environments where remote communication is unreliable.

According to one example, the system further comprises a sensing system for acquiring sensor data from the mobile device and a localization system being configured to determine the primary pose estimate using the sensor data and provide the primary pose estimate to the first apparatus, and optionally to the second apparatus or the mobile device to plan and control motion of the mobile device, the first apparatus being comprised by the localization system, and the second apparatus being comprised by the sensing system.

Indeed, the system comprises the sensing system and the localization system, each playing a distinct yet interconnected role e.g., in determining and refining the primary pose estimate of the mobile device. The sensing system may be responsible for acquiring sensor data from the mobile device using various onboard and external sensors, such as IMUs, cameras, LIDAR, GPS, or wheel encoders. The localization system may process this data to determine the primary pose estimate, ensuring an accurate representation of the mobile device's position and orientation. Upon computing the primary pose estimate, the localization system may provide it to at least the first apparatus according to the present subject matter, allowing continuous refinement of state estimation. Structurally, the first apparatus may be part of the localization system, meaning it may handle state estimation, sensor fusion, and motion modeling, while the second apparatus may be part of the sensing system. The sensing system may further comprise a motion planner that may control and plan motion of the mobile device based on the primary pose estimate received at the mobile device. An advantage of this setup may be that it may allow for dynamic updates to the primary pose estimate based on newly acquired sensor data. This structure may also support distributed or hierarchical localization approaches, where the localization system may reside in the cloud or an external processing unit, while the sensing system remains onboard.

For example, the transfer delay of the sensor data may be between the sensing system and the localization system. The localization system may be configured to provide the initial primary pose estimate or perform the first and/or second corrections and provide the resulting primary pose estimate to the first apparatus.

According to one example, triggering the update of the primary pose estimate comprises controlling the sensing system to provide current sensor data to the localization system.

This process may play a role in adaptive localization, where real-time adjustments may be necessary to maintain an accurate representation of the mobile device's position and orientation. The sensing system may continuously collect raw sensor data but does not always transmit it immediately. Instead, the system may control when sensor data is forwarded to the localization system based on predefined triggers, such as the first and second triggering conditions.

According to one example, the implementation of the first motion model comprises using a state adjustment term that accounts for a change in orientation of the mobile device during a time step, wherein the time step is a discrete interval in a numerical integration of the first motion model.

This adjustment may ensure that the estimated motion trajectory accurately reflects the mobile device's real-world dynamics, particularly in systems where rotational motion may significantly affect positioning accuracy. By integrating an orientation correction, such as a mid-step angular velocity correction or a higher-order numerical method (e.g., Runge-Kutta), the system may more accurately predict the mobile device's future state while minimizing drift and localization errors. Additionally, using numerical integration may ensure that the system can handle variable time steps, allowing for more adaptive computation.

According to one example, the orientation adjustment term comprises an angular displacement contribution during a half of the time step.

Instead of assuming that the orientation remains constant throughout the time step, this adjustment may account for gradual changes in orientation. By incorporating the angular displacement at the midpoint of the time step, the system may effectively reduce integration errors that arise from assuming an instantaneous orientation change at the beginning or end of the step. This approach may particularly be advantageous in motion models that rely on numerical integration, such as Runge-Kutta.

According to one example, the first apparatus is configured to determine the first estimation error on the first state estimate by comparing the first state estimate with at least one of: the secondary pose estimate or the first reference state estimate.

This comparison may be performed position-wise, evaluating differences in position coordinates (e.g., x, y, z), and/or orientation-wise, assessing deviations in orientation angles (e.g., yaw, pitch, roll). When comparing the first state estimate with the secondary pose estimate, the first apparatus may determine whether the estimated position and orientation align with the pose derived from sensor measurements. Alternatively, when comparing the first state estimate with the first reference state estimate, the first apparatus may evaluate whether two state-estimated positions and orientations remain consistent. Alternatively, the first estimation error may be a combination of the two alternative comparisons, meaning that it accounts for both the difference between the first state estimate and the secondary pose estimate and the difference between the first state estimate and the first reference state estimate. This combined error metric may allow to integrate sensor-derived pose deviations with state estimation inconsistencies, providing a more comprehensive measure of localization accuracy.

According to one example, the comparison of the first state estimate with the first reference state estimate is performed by computing a difference between the first state estimate with the first reference state estimate at a specific time instant.

This comparison may be conducted position-wise, by evaluating deviations in position coordinates (e.g., x, y, z), and/or orientation-wise, by assessing differences in orientation angles (e.g., yaw, pitch, roll). By ensuring that the comparison is made at the same time instant, this may account for temporal consistency, preventing inaccuracies due to latency or asynchronous updates.

Also, the comparison of the first state estimate with the secondary pose estimate may, for example, be performed at a time instant corresponding to when the secondary pose estimate was acquired.

Similarly, the comparison features described with reference to the first apparatus to determine the first estimation error may also be applied to the second apparatus, which may be configured to determine the second estimation error on the second state estimate using at least one of: the other secondary pose estimate or the second reference state estimate. For example, the second apparatus may perform position-wise and/or orientation-wise comparisons, evaluating differences in position coordinates (e.g., x, y, z) and/or orientation angles (e.g., yaw, pitch, roll), similar to the comparisons conducted by the first apparatus.

In one example implementation of the present subject matter, the state and pose estimation may involve two-dimensional (2D) motion, where the position and orientation of the mobile device are determined within a 2D reference frame. The pose of the mobile device may be presented by the position and the orientation expressed in a global reference frame. In this example of a 2D pose (e.g. for the mobile device moving in 2-dimensional space such as WMR), the pose can be expressed as *X =* (*x*,*y*,*θ*), representing its 2D position in the *x* and *y* coordinates, and its yaw (or heading). The input to the mobile device is represented by the linear and angular velocity, denoted by *u*₁ and *u*₂ respectively. The former drives the mobile device to move forwards, whereas the latter rotates the mobile device and changes its heading direction. The kinematics of the device moving in 2D space may be depicted by the following model which may provide an example of the reference motion model: $\left\{\begin{matrix}\dot{x} \left(t\right) = {u}_{1} \left(t\right) \left(1+{d}_{1}\left(t\right)\right) cos \left(θ\left(t\right)\right) \\ \dot{y} \left(t\right) = {u}_{1} \left(t\right) \left(1+{d}_{1}\left(t\right)\right) sin \left(θ\left(t\right)\right) \\ \dot{θ} = {u}_{2} \left(1+{d}_{2}\left(t\right)\right)\end{matrix}\right.$ where *d*₁(*t*), *d*₂(*t*) ∈ [-1, 1] are disturbances of the kinematic model that might be due to the uncertainty of the mobile device motion, which are bounded by |*d*₁| ≤ *d*_{1,*max*} and |*d*₂| ≤ *d*₂*_{,max}.* The mobile device's pose may be measured by internal and external sensors and estimated by any third-party estimation algorithms. The odometry information may be available on the mobile device, whereas onboard LIDAR or camera measurements may be provided to build up a pose estimation by the third-party estimation algorithm. An external camera system may provide another source of pose estimation. The measurements of the mobile device's pose by its onboard odometry are denoted by the following pose which may provide an example of the other secondary pose estimate determined by the second apparatus: ${Y}_{r} \left(t\right) = {\left(x\left(t\right),y\left(t\right),θ\left(t\right)\right)}^{T} + {v}_{r} \left(t\right)$ where ${v}_{r} \left(t\right) ∈ {ℜ}^{3}$ defines the measurement noise bounded by |*vᵣ*(*t*)| ≤ *v_{r,max}.*

The pose measurements which provide an example of the primary pose estimate may be obtained from onboard sensor data are given by: *Y*_{*c*1}(*t*) = (*x*(*t - hᵤ*), *y*(*t - hᵤ*), *θ*(*t - hᵤ*))*^{T} + v*_{*c*1}(*t*) (3), with *hᵤ* being the communication or processing delay assumed to be constant, as the pose estimate at the current timestamp t is provided with the sensor data collected previously at the timestamp $\left(t-{h}_{u}\right) . {v}_{c 1} \left(t\right) ∈ {ℜ}^{3}$ is the measurement noise bounded by |*v*_{*c*1}(*t*)| ≤ *v*_{*c*1}*_{,max}.* The pose measurements from an external camera system, which may provide an example of the secondary pose estimate determined by the first apparatus, are given by ${Y}_{c 2} \left(t\right) = {\left(x\left(t\right),y\left(t\right),θ\left(t\right)\right)}^{T} + {v}_{c 2} \left(t\right)$ where ${v}_{c 2} ∈ {ℜ}^{3}$ defines the measurement noise bounded by |*v*_{*c*2}(*t*)| ≤ *v*_{*c*2}*_{,max}.*

The internal model, which may provide an example of the first motion model, uses the velocity input provided to the mobile device to estimate the pose of the mobile device. An example of the internal model is given by the kinematics model of the mobile device, such as: $\left\{\begin{matrix}\dot{ξ} \left(t\right) = {u}_{1} \left(t\right) cos \left(q\left(t\right)\right) \\ \dot{ψ} \left(t\right) = {u}_{1} \left(t\right) sin \left(q\left(t\right)\right) \\ \dot{q} = {u}_{2} \left(t\right)\end{matrix}\right.$ where *ξ*(*t*), *ψ*(*t*) *and q*(*t*) represent respectively the state estimate of *x*(*t*), *y*(*t*)*, θ*(*t*) by the internal model, concatenated by a new variable Ξ(t) = [*ξ*(*t*), *ψ*(*t*), *q*(*t*)]*^{T}*. Compared to the kinematic model (or the reference motion model) of the mobile device, the internal model does not consider any disturbances.

Equation (5) represents the general state evolution in continuous form, typically expressed as a differential equation that defines how the state changes over time. The present subject matter may use a numerical integration of the first motion model in order to enable an efficient implementation of the first motion model based on estimated errors. Specifically, to transition from equation (5) to its numerical implementation as in equation (6), a numerical integration method may be applied to discretize the continuous-time representation of the state dynamics. For example, in a discrete-time implementation, the implementation of the internal model as described in equation (5) may be given by the following formula based on Runge-Kutta approximation method $\left\{\begin{matrix}ξ \left({t}_{k + 1}\right) = ξ \left({t}_{k}\right) + {u}_{1} \left({t}_{k}\right) cos \left(q\left({t}_{k}\right)+\frac{{u}_{2} \left({t}_{k}\right)}{2}T\right) T \\ ψ \left({t}_{k + 1}\right) = ψ \left({t}_{k}\right) + {u}_{1} \left({t}_{k}\right) sin \left(q\left({t}_{k}\right)+\frac{{u}_{2} \left({t}_{k}\right)}{2}T\right) T \\ q \left({t}_{k + 1}\right) = q \left({t}_{k}\right) + {u}_{2} \left({t}_{k}\right) T\end{matrix}\right.$ with *tₖ*, *t*_{*k*+1} *>* 0 defining the current timestamp and the next timestamp of the internal state updates, and T = *t*_{*k*+1} *- tₖ* being the time interval of two consecutive updates. The term $\frac{{u}_{2} \left({t}_{k}\right)}{2} T$ may, for example, may be enabled by Runge-Kutta method to improve the accuracy of calculation of solutions of equation (5).

In the context of cloud-based localization system, two internal models are maintained both on the mobile device and on the cloud side, the states of which are synchronized. The subscript r, c are used to distinguish the internal models implemented on the mobile device (e.g., robot) and the cloud side where the localization system resides. To quantify an estimation error of the internal models, the variable of the estimation error is first defined by ${E}_{i} \left(t\right) = \left(\begin{matrix}{e}_{xi} \left(t\right) \\ {e}_{yi} \left(t\right) \\ {e}_{θi} \left(t\right)\end{matrix}\right) = \left(\begin{matrix}x \left(t\right) - {ξ}_{i} \left(t\right) \\ y \left(t\right) - {ψ}_{i} \left(t\right) \\ θ \left(t\right) - {q}_{i} \left(t\right)\end{matrix}\right)$ In the cloud-based context, *Eᵣ*(*t*) and *E_{c}*(*t*) are separately defined, in which the error is computed between the state of the internal model and the pose measurements available on each side, e.g. odometry pose on the mobile device and pose measurement by camera or lidar e.g., in the edge cloud. *Eᵣ*(*t*) and *E_{c}*(*t*) may, for example, represent the first estimation error and the second estimation error respectively. Then, a Lyapunov function corresponding to the sum of the square of the errors in different axes may be defined to quantify the estimation error with a scalar value, e.g. ${V}_{i} \left(t\right) = {E}_{i} {\left(t\right)}^{T} {E}_{i} \left(t\right) = {e}_{xi}^{2} \left(t\right) +$ ${e}_{yi}^{2} \left(t\right) + {e}_{θi}^{2} \left(t\right)$ (8). By differentiating the estimation error in equation (7) with respect to time and considering the kinematics and internal model given by equations (1) and (5), the following expression can be obtained $\left\{\begin{matrix}{\dot{e}}_{xi} \left(t\right) = {u}_{1} \left(t\right) \left[\left(1+{d}_{1}\left(t\right)\right)cos\left({e}_{θi}\left(t\right)+{q}_{i}\left(t\right)\right)-cos\left({q}_{i}\left(t\right)\right)\right] \\ {\dot{e}}_{yi} \left(t\right) = {u}_{1} \left(t\right) \left[\left(1+{d}_{1}\left(t\right)\right)sin\left({e}_{θi}\left(t\right)+{q}_{i}\left(t\right)\right)-sin\left({q}_{i}\left(t\right)\right)\right] \\ {\dot{e}}_{θi} \left(t\right) = {u}_{2} \left(t\right) {d}_{2} \left(t\right)\end{matrix}\right.$ This allows to derive the derivative of the Lyapunov function in equation (8) to obtain the following expression *V̇ᵢ*(*t*) *=* 2*eₓᵢ*(*t*)*ėₓᵢ*(*t*) *+* 2*e_{yi}*(*t*)*ė_{yi}*(*t*) *+* 2*e_{θi}*(*t*)*ė_{θi}*(*t*) (10). Using Young's inequality theorem (i.e., $ab \leq \frac{{a}^{2}}{2} + \frac{{b}^{2}}{2}$), equation (10) can be further derived to obtain the following inequality equation ${\dot{V}}_{i} \left(t\right) \leq {e}_{xi}^{2} \left(t\right) + {\dot{e}}_{xi}^{2} \left(t\right) + {e}_{yi}^{2} \left(t\right) + {\dot{e}}_{yi}^{2} \left(t\right) + {e}_{θi}^{2} \left(t\right) +$ ${\dot{e}}_{θi}^{2} \left(t\right)$ (11).

By considering the relationship in equation (9), the following inequality equation can be obtained after the mathematical simplification $\begin{matrix}{\dot{V}}_{i} \left(t\right) \leq {V}_{i} \left(t\right) + {u}_{1}^{2} \left(t\right) \left({d}_{1}^{2}\left(t\right)+4\left({d}_{1}\left(t\right)+1\right){sin}^{2}\left(\frac{{e}_{θi} \left(t\right)}{2}\right)\right) + {u}_{2}^{2} \left(t\right) {d}_{2}^{2} \left(t\right) \\ \leq {V}_{i} \left(t\right) + {u}_{1}^{2} \left(t\right) \left({d}_{1 , max}^{2}+4\left({d}_{1 , max}+1\right)\right) + {u}_{2}^{2} \left(t\right) {d}_{2 , max}^{2}\end{matrix}$

Finally, by integrating the derivative of the Lyapunov function derived in equation (12), a function denoted by 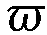 (*t*) can be defined as a solution of linear differential inequality (12), which may be used to evaluate the level of estimation error in the presence of model disturbances, measurement noises, and uncertainties. The Lyapunov analysis is an example of a method that may be used to evaluate the level of estimation error. However, other methods can also be used.

The present subject matter may enable the submission of onboarded sensor data to the localization system according to three different cases which may be be mathematically represented as follows: $\left|{Ξ}_{r}\left(t\right)-{Y}_{r}\left(t\right)\right| > {v}_{r , max} + Δ$ $\left|{Ξ}_{c}\left(t\right)-{Y}_{c 2}\left(t\right)\right| > {v}_{c 2 , max} + Δ$ $\sqrt{{ϖ}_{r} \left(t\right)} = \sqrt{{ϖ}_{c} \left(t\right)} > δ + Δ$ where |.| is the 2-norm of a vector, $\sqrt{{ϖ}_{r} \left(t\right)} = \sqrt{{ϖ}_{c} \left(t\right)}$ represents, for example, the first and second estimation errors that are assumed to be the same on both sides: the interfaces with the system for sending pose estimation from the localization system to the mobile device and the other, which is the sensor data transmission system. Case 1 may provide an example of the second triggering condition, and the difference |Ξᵣ(*t*) - *Yᵣ*(*t*)| may provide an example of the second estimation error. Case 2 may provide an example of the first triggering condition, and the difference |Ξ*_{c}*(*t*) - *Y*_{*c*2}(*t*)| may provide an example of the first estimation error. Case 3 may provide an example of the first or second triggering condition, where $\sqrt{{ϖ}_{c} \left(t\right)}$ and $\sqrt{{ϖ}_{r} \left(t\right)}$ may provide an example of the first estimation error and the second estimation error respectively. In the case of the cloud-based localization systems, these two entities may be at the edge cloud side and on the mobile device. *δ = δ*(*v*_{*c*1*,max*}, *v*_{*c*2*,max*}) is a function of maximum measurement noises of the localization system and external camera system e.g., on the cloud side, an example of which is a maximum function. Δ is a scalar value defining the admissible range of estimation error.

After an instance of uplink communication is triggered, a pose estimate is provided by the third-party localization algorithm, which is then used to predict the state estimation at the current timestamp (as the sensor data is collected prior to when it is proceeded). The state estimation update of the pose measurements may be presented by the following equation $Ξ \left(t\right) = {Y}_{c 1} \left(t\right) + {\int }_{t - {h}_{u}}^{t} \left(\begin{matrix}{u}_{1} \left(s\right) cos \left({q}_{c}\left(s\right)\right) \\ {u}_{1} \left(s\right) sin \left({q}_{c}\left(s\right)\right) \\ {u}_{2} \left(s\right)\end{matrix}\right) ds$ When there is a mismatch between the state estimates of the pose measurements and the internal model state, a communication may be performed involving synchronization of internal models both implemented at the interfaces with the localization system to send pose estimation to the mobile device and the other, which is the sensor data transmission system. Equation (13) may provide an example implementation of the first correction for the primary pose estimate.

Such requirements are triggered by the following condition corresponding to case 4: |Ξ_{c}(*t*) - Ξ(*t*)| > *δ* + Δ. When the pose estimation communication is required, a prediction of the state estimation will be performed, which helps to predict the state at the future timestamp and synchronize the states of both internal models when the information is communicated to the mobile device due to the downlink communication delay or data transfer delay defined by *h_{d}*: Ξᵣ(*t* + *h_{d}*) = Ξ_{c}(*t* + *h_{d}*) = Ξ(t) + ${\int }_{t}^{t + {h}_{d}} \left(\begin{matrix}{u}_{1} \left(s\right) cos \left({q}_{c}\left(s\right)\right) \\ {u}_{1} \left(s\right) sin \left({q}_{c}\left(s\right)\right) \\ {u}_{2} \left(s\right)\end{matrix}\right) ds$ (14). Equation (14) may provide an example implementation of the second correction for the primary pose estimate.

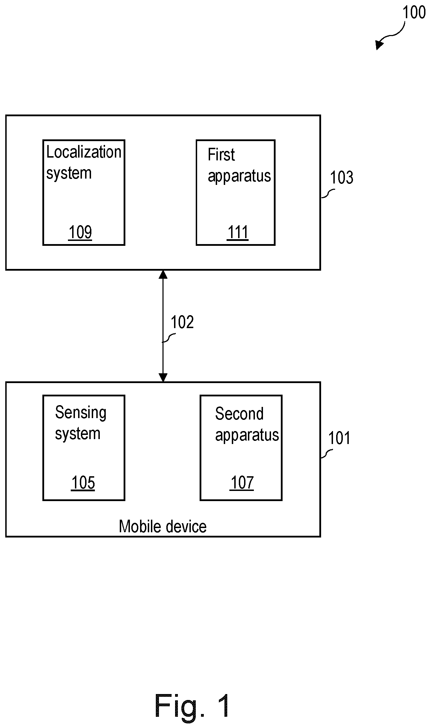

**FIG. 1** is a block diagram of a system for localization according to an example of the present subject matter. The system 100 comprises a mobile device 101 and a processing unit 103, which may be either remotely connected via a communication link 102 or collocated within the same system architecture.

The mobile device 101 includes a sensing system 105, which acquires sensor data from onboard sources such as IMUs, cameras, LIDAR, GPS, or wheel encoders. Additionally, the mobile device 101 comprises a second apparatus 107, which may process sensor data locally for state estimation or motion tracking.

The processing unit 103 includes a localization system 109, responsible for determining, refining, or correcting the pose estimate of the mobile device 101. The first apparatus 111, also part of the processing unit 103, may perform higher-level decision-making, state estimation refinements, model updates, or communication tasks.

The communication link 102 facilitates data exchange between the mobile device 101 and the processing unit 103, allowing for flexible localization, navigation, and motion estimation strategies. In a remote configuration, the processing unit 103 may, for example, leverage cloud computing resources to offload computationally intensive tasks, while in a collocated configuration, all processing may occur onboard the mobile device 101 for real-time responsiveness and minimal network dependency. The communication between the components of the system 100 may utilize publish/subscribe messaging protocols using wired or wireless communication links. For example, the communication link 102 may be a wired or wireless communication link.

By integrating sensor data, motion models, and estimation algorithms, the system 100 may support adaptable localization approaches, ensuring robust, scalable, and efficient state estimation across different operational environments.

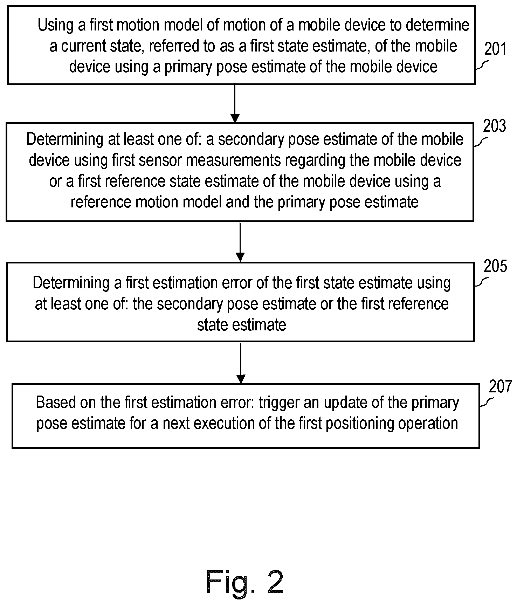

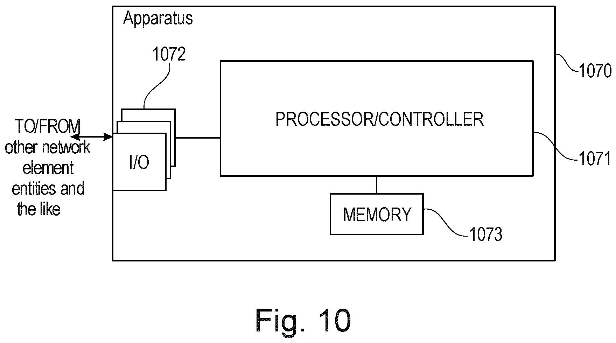

**FIG. 2** is a process flowchart illustrating a method according to an example of the present subject matter. For the purpose of explanation, the method described in reference to FIG. 2 may be implemented in an apparatus such as the first apparatus 111 or the second apparatus 107 illustrated and described in reference to FIG. 1 or apparatus illustrated and described in reference to FIG. 10 but is not limited to this implementation. The method comprises a first positioning operation comprising blocks 201 to 207.

At block 201, a first motion model of motion of a mobile device may be used to determine a current state, referred to as a first state estimate of the mobile device using a primary pose estimate of the mobile device. At block 203, at least one of the following may be determined: a secondary pose estimate of the mobile device using first sensor measurements regarding the mobile device or a first reference state estimate of the mobile device using a reference motion model and the primary pose estimate. At block 205, a first estimation error of the first state estimate may be determined using at least one of: the secondary pose estimate or the first reference state estimate. At block 207, based on the first estimation error, an update of the primary pose estimate may be triggered for using the updated primary pose estimate for a next execution of the first positioning operation.

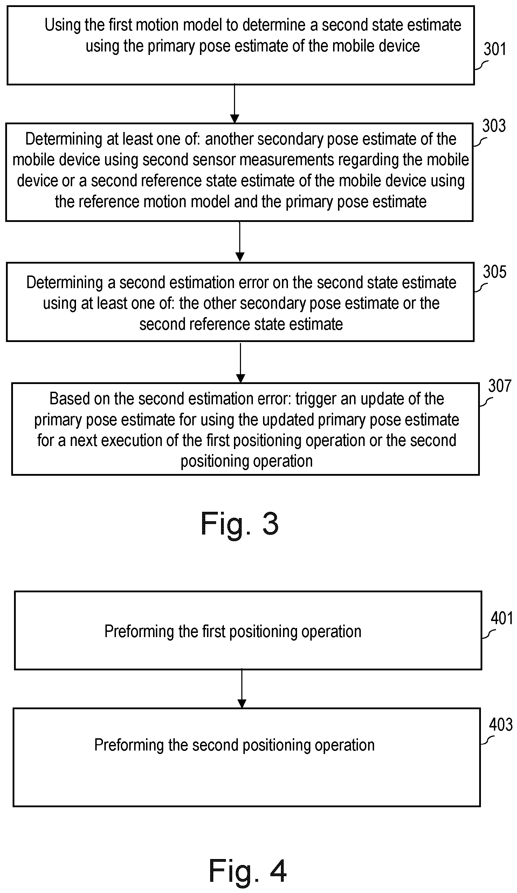

**FIG. 3** is a process flowchart illustrating a method according to an example of the present subject matter. For the purpose of explanation, the method described in reference to FIG. 3 may be implemented in an apparatus such as the first apparatus 111 or the second apparatus 107 illustrated and described in reference to FIG. 1 or apparatus illustrated and described in reference to FIG. 10 but is not limited to this implementation. The method comprises a second positioning operation comprising blocks 301 to 307.

At block 301, the first motion model may be used to determine a second state estimate using the primary pose estimate of the mobile device. At block 303, at least one of the following may be determined: another secondary pose estimate of the mobile device using second sensor measurements regarding the mobile device or a second reference state estimate of the mobile device using the reference motion model and the primary pose estimate. At block 305, a second estimation error on the second state estimate may be determined using at least one of: the other secondary pose estimate or the second reference state estimate. At block 307, based on the second estimation error: an update of the primary pose estimate may be triggered for using the updated primary pose estimate for a next execution of the first positioning operation or the second positioning operation.

**FIG. 4** is a process flowchart illustrating a method according to an example of the present subject matter. For the purpose of explanation, the method described in reference to FIG. 4 may be implemented two apparatuses such as the first apparatus 111 and the second apparatus 107 illustrated and described in reference to FIG. 1 or apparatus illustrated and described in reference to FIG. 10 but is not limited to this implementation. The method comprises the execution of the first positioning operation in block 401 and the second positioning operation in block 403. Block 401 may comprise execution of blocks 201 to 207. Block 403 may comprise execution of blocks 301 to 307.

In one example implementation of the method of FIG. 4, in block 401, the first positioning operation may be repeatedly performed in accordance with the first frequency. In block 403, the second positioning operation may be repeatedly performed in accordance with the second frequency. After each execution instance of the first positioning operation the method may comprise providing the resulting updated primary pose estimate to the first apparatus to perform the next/upcoming execution of the first positioning operation using the updated primary pose estimate, and optionally sending the resulting updated primary pose estimate, if the update occurs, to the second apparatus to perform the next/upcoming execution of the second positioning operation using the updated primary pose estimate. In one example, the two loops may be synchronized, meaning that the updated primary pose estimate, if an update occurs during one of the positioning operations, may always be available before the execution of the other positioning operation, ensuring that both processes operate with the most up-to-date information. Alternatively, the loops may operate asynchronously, where the second positioning operation may proceed using the most recently available primary pose estimate, even if an update from the first positioning operation has not yet been received.

In one example, a computer program product may be provided comprising processor executable instructions for causing an apparatus for performing the first positioning operation or the second positioning operation (e.g., as described with reference to FIG. 4).

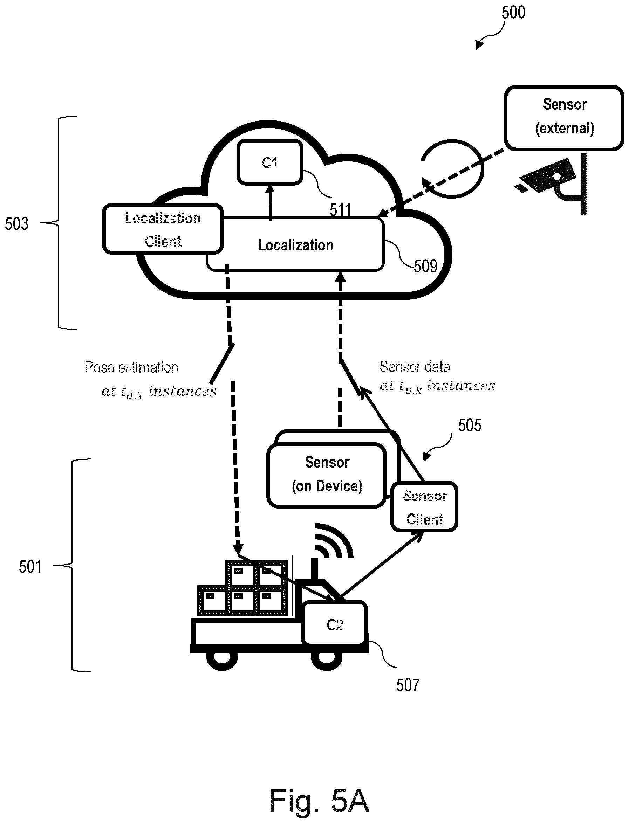

**FIG. 5A** is a block diagram illustrating a cloud-based localization system in accordance with an example of the present subject matter.

The cloud-based localization system 500 comprises a mobile device 501 and a cloud processing unit 503, which may be hosted on a cloud computing infrastructure or another remote processing system. The mobile device 501 and the cloud processing unit 503 may be connected via a communication link, allowing for data exchange between the sensing and processing components of the system. The mobile device 501 includes a sensing system 505, which acquires sensor data and transmits it at time instances t_{u,k} to the localization system 509 in the cloud processing unit 503. The mobile device 501 includes a second apparatus 507 (C2 unit), which may be responsible for handling local processing and state estimation tasks. The cloud processing unit 503 hosts the localization system 509, which processes sensor data to estimate the pose (the primary pose estimate) of the mobile device 501 at time instances t_{d,k}. A first apparatus 511 (C1 unit) is included in the cloud processing unit 503 and may facilitate computational tasks related to pose estimation and synchronization with the mobile device 501 and the C2 unit. Additionally, an external sensor provides environmental data that may supplement localization accuracy. The C1 unit and C2 unit each comprise a same copy of an internal model which may provide an example implementation of the first motion model.

Hence, for localization systems implemented in the cloud, the C1 unit may be located on a remote server within the cloud processing unit 503, while the C2 unit may be implemented on the mobile device 501, residing alongside the onboard sensors. However, when the localization system 500 is implemented on the mobile device 501, the C1 unit may also reside on the mobile device 501. The C1 unit maintains the internal model of the mobile device 501 which estimates the mobile device's state over time e.g., when precise measurements are not available. The mobile device's internal model may be used to reduce the reliance on sensor data for more accurate pose estimation. At the initial stage, C1 unit receives the primary pose estimate (e.g., the initial primary pose estimate) provided by the localization system 509, using the mobile device's internal sensors as well as available external sensors. Subsequent instances of updates of the accurate primary pose estimate may occur under specific conditions. The internal model of the mobile device representing its dynamic behavior is maintained at C2 unit, wherein at the initial stage, C2 unit receives the accurate primary pose estimate provided by the localization system, followed by updates of the accurate pose primary estimate under specific conditions. C2 unit, situated close to the internal sensors, may periodically estimate the mobile device's pose using odometry, if available. This may rely on sensors like motor encoders or onboard IMUs, which may provide less accurate pose estimation but require minimal computational resources. The primary pose estimate is referred as accurate pose estimation or accurate primary pose estimate to indicate that it was determined by the localization system e.g., using the primary algorithm and sensor data from the primary sensor sources.

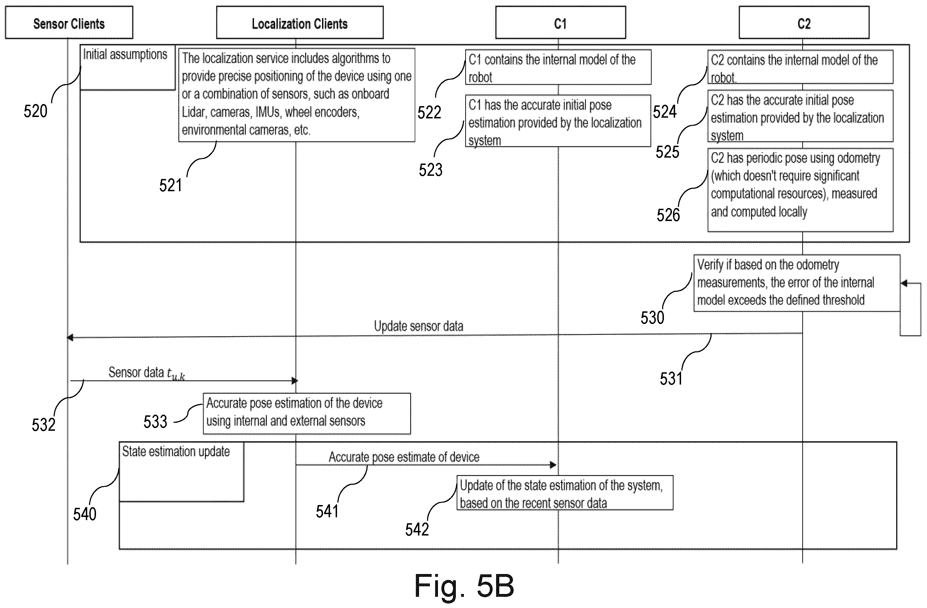

By integrating on-device sensing with cloud-based processing, the cloud-based localization system 500 may balance local real-time computations with high-precision remote localization, enabling adaptive positioning. Specifically, the diagram of FIG. 5A illustrates the state of the cloud-based localization system for a use case involving steps, which represent the transmission of sensor data to enable the update of the primary pose estimate of the mobile device. This update occurs through a sensor client of the sensing system 505 and is triggered based on the fulfillment of specific triggering conditions, ensuring that pose updates are performed only when necessary to optimize resource efficiency and localization accuracy. With this use case, the C2 unit may detect that the mobile device's current position, based on odometry measurements, is too far from the estimation of the internal model and thus trigger executions of the steps. FIG. 5B provides further details of this use case.

**FIG. 5B** illustrates a workflow diagram detailing how the localization system of FIG. 5A processes pose estimation updates in accordance with an example of the present subject matter. The workflow diagram may involve components of the localization system 500 such as the sensor client, the localization client, the C1 unit and the C2 unit.

An initiation phase 520 may be provided. In the initial phase, the localization client, includes algorithms (521) that provide pose estimations for the mobile device based on various sensor sources, such as onboard sensors, external tracking systems, and environmental features. The C1 unit contains an internal model (522) of the mobile device's motion and maintains an (first) accurate primary pose estimate (523) as received from the localization system e.g., in order to determine a mobile device's state such as the first state estimate. The C2 unit, similarly, maintains an internal model (524) and the accurate primary pose estimate (525) e.g., in order to determine a mobile device's state such as the first state estimate, and additionally has (526) a periodic pose estimate (the other secondary pose estimate) using odometry. In step 530, a verification process may involve checking if based on the odometry measurements, the error of the internal model exceeds the defined threshold. This verification may for example involve the comparison between the first state estimate and the other secondary pose estimate. If the error exceeds the threshold, the C2 unit may control (531) the sensor client to send current sensor data (532) to the localization client. This sensor data is then processed (533) by the localization system to obtain a new primary pose estimate of the mobile device, leading to a pose estimation update phase (540). The state estimation update phase 540 comprises steps 541 and 542. Following this update, the new primary pose estimate is sent (541) to the C1 unit. The C1 unit may update (542) the state estimation (e.g., the first state estimate) of the mobile device, based on the received primary pose estimate. FIG. 5B may provide an example implementation according to Case 1.

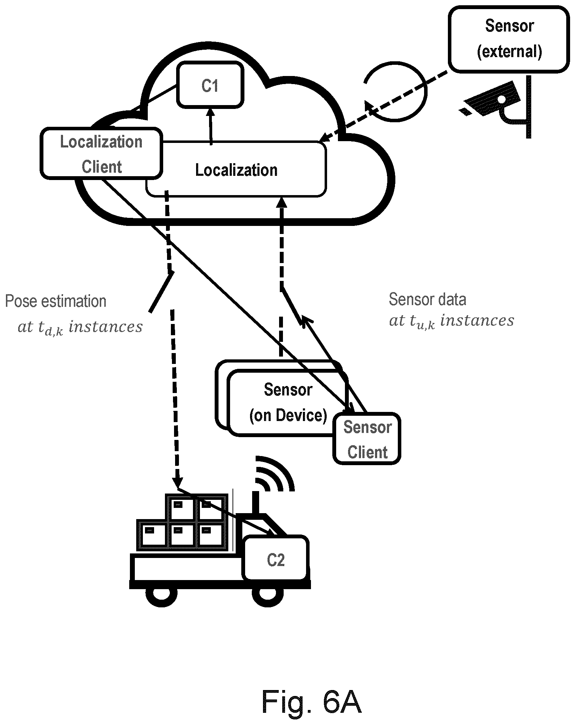

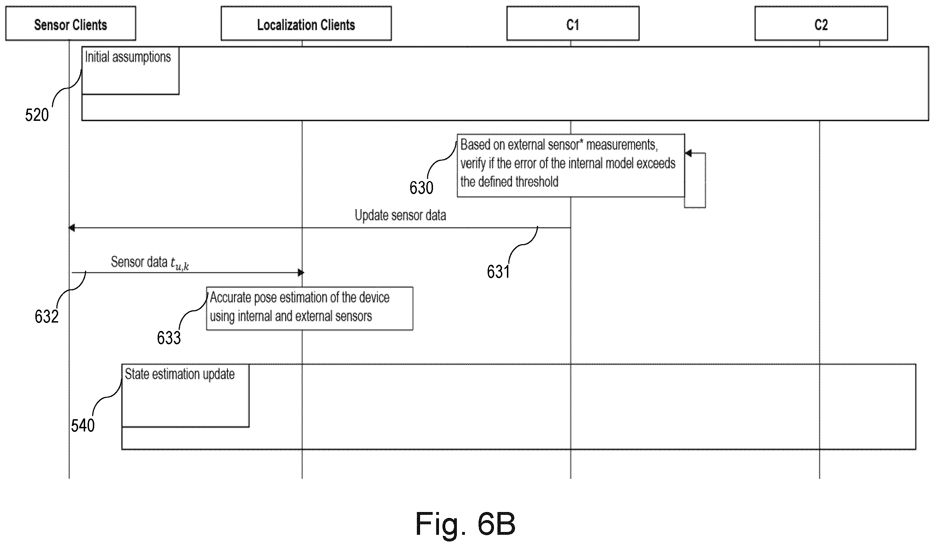

**FIG. 6A** is a block diagram illustrating a cloud-based localization system in accordance with an example of the present subject matter. The cloud-based localization system of FIG. 6A is the same as the system shown in FIG. 5A, with the difference that another use case is illustrated. In this scenario, the C1 unit detects that the primary pose estimate of the mobile device, based on external sensor measurements, deviates too far from the estimation (e.g., the first state estimate) of the internal model. This triggers to correct the localization estimate as described in FIG. 6B.

**FIG. 6B** illustrates a workflow diagram detailing how the localization system of FIG. 6A processes pose estimation updates in accordance with an example of the present subject matter. The workflow diagram may involve components of the localization system 500 such as the sensor client, the localization client, the C1 unit and the C2 unit.

The initiation phase 520 as described with reference to FIG. 5B may be provided. The C1 unit may verify (630) based on external sensor measurements (e.g., secondary pose estimate), if the error of the internal model exceeds the defined threshold. This verification may for example involve the comparison between the first state estimate obtained by the C1 unit and the secondary pose estimate. If the error of the internal model exceeds the defined threshold, the C1 unit may control (631) the sensor client to send current sensor data (632) to the localization client. This sensor data is then processed (633) by the localization system to obtain a new primary pose estimate of the mobile device, leading to the pose estimation update phase 540 as described with reference to FIG. 5B. FIG. 6B may provide an example implementation according to Case 2.

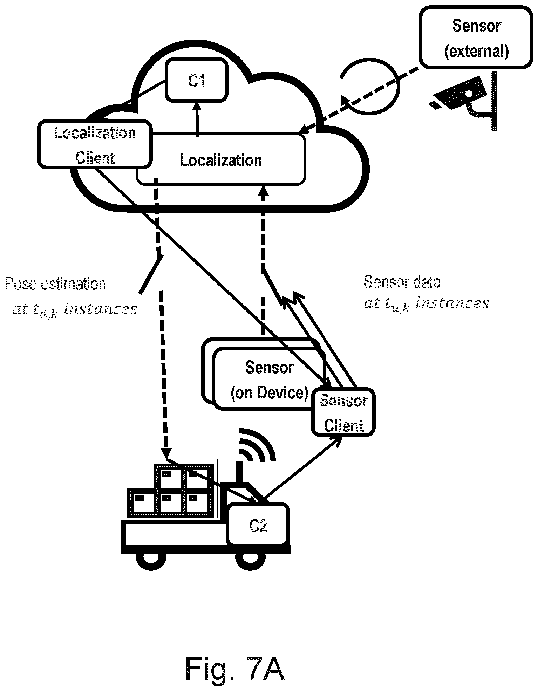

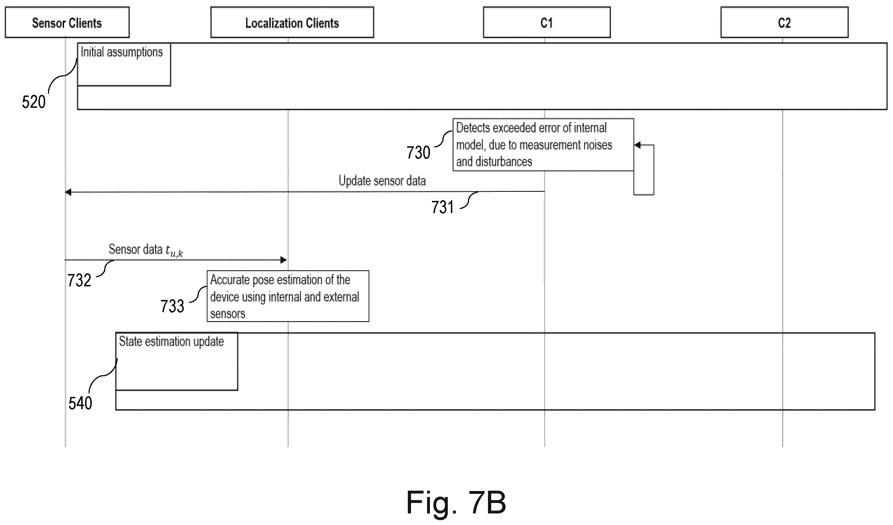

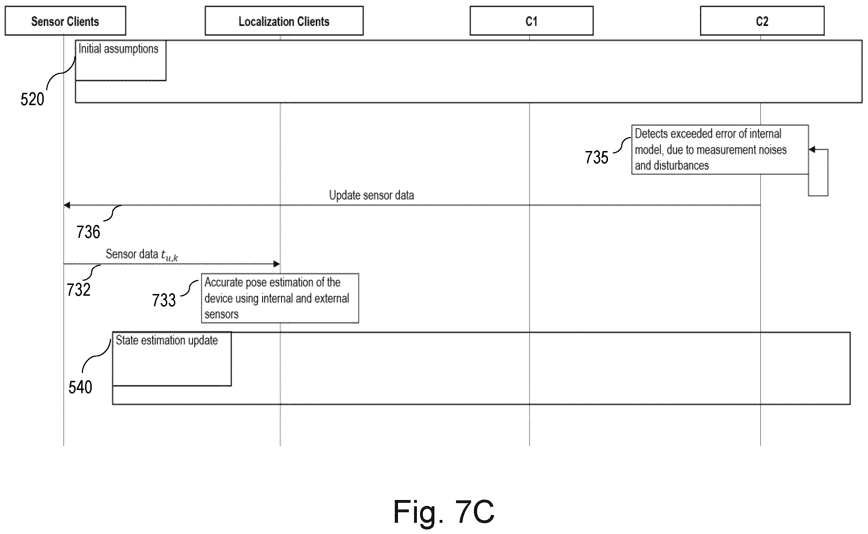

**FIG. 7A** is a block diagram illustrating a cloud-based localization system in accordance with an example of the present subject matter. The cloud-based localization system of FIG. 7A is the same as the system shown in FIG. 5A, with the difference that another use case is illustrated. In this scenario, the C1 unit or C2 unit detects that the internal model errors become too large due to measurement noises and disturbances. FIG. 7B and FIG. 7C provide further details of this use case.

**FIG. 7B** illustrates a workflow diagram detailing how the localization system of FIG. 7A processes pose estimation updates in accordance with an example of the present subject matter. The workflow diagram may involve components of the localization system 500 such as the sensor client, the localization client, the C1 unit and the C2 unit.

The initiation phase 520 as described with reference to FIG. 5B may be provided. The C1 unit may detect (730) exceeded error of internal model, due to measurement noises and disturbances and uncertainties and the C1 unit may control (731) the sensor client to send current sensor data (732) to the localization client. This process may for example involve the comparison between the first state estimate and the first reference state estimate obtained using the reference model and the primary pose estimate.

Alternatively, as shown in FIG. 7C, C2 unit may detect (735) exceeded error of internal model, due to measurement noises and disturbances and uncertainties and the C2 unit may control (736) the sensor client to send updated sensor data (732) to the localization client. This process may for example involve the comparison between the first state estimate and the second reference state estimate obtained using the reference model and the primary pose estimate.

This sensor data is then processed (733) by the localization system to obtain a new primary pose estimate of the mobile device, leading to the pose estimation update phase 540 as described with reference to FIG. 5B. FIG. 7B or FIG. 7C may provide an example implementation according to Case 3.

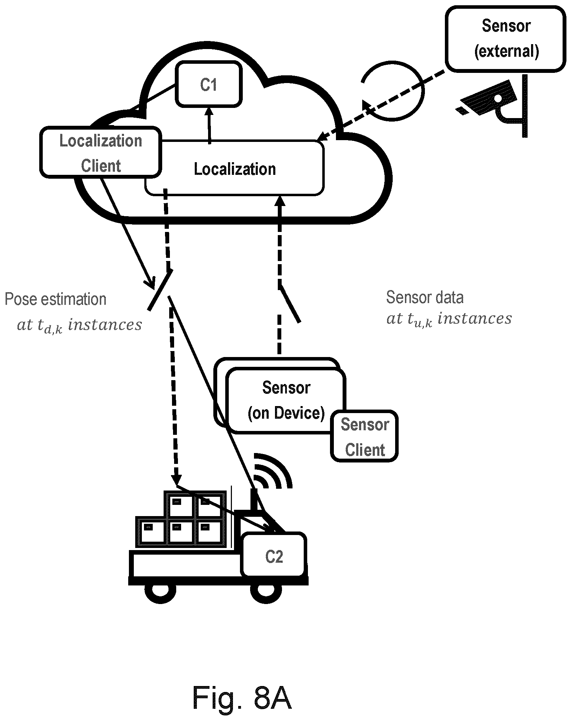

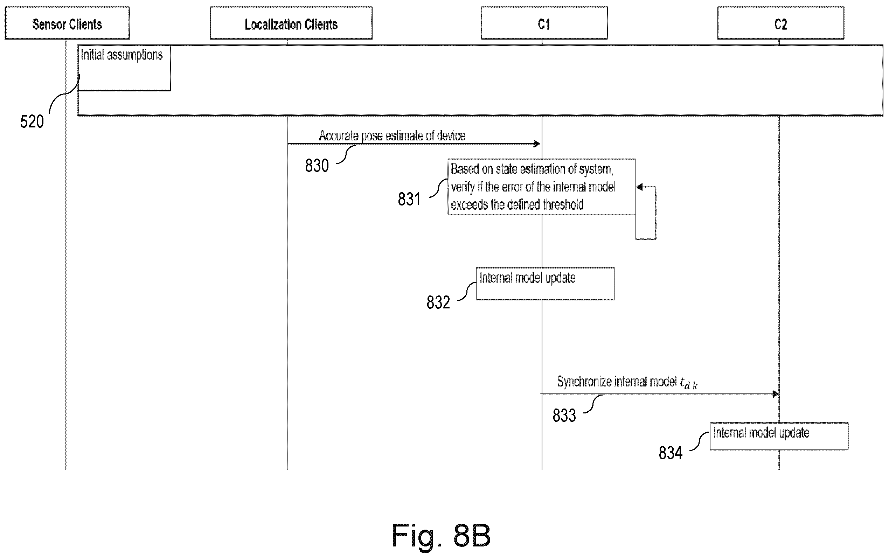

**FIG. 8A** is a block diagram illustrating a cloud-based localization system in accordance with an example of the present subject matter. The cloud-based localization system of FIG. 8A is the same as the system shown in FIG. 5A, with the difference that another use case is illustrated. In this scenario, the C1 unit detects that the primary pose estimate from the localization system is too far from the internal model (e.g., from the first state estimate). At this point, the internal model of C1 and C2 units may be updated. FIG. 8B provides further details of this use case. Updating the internal model, as used herein, refers to providing to the internal model updated inputs, for example, by updating the primary pose estimate, which may serve as the starting point for the internal model to perform state estimation of the mobile device.

**FIG. 8B** illustrates a workflow diagram detailing how the localization system of FIG. 8A processes pose estimation updates in accordance with an example of the present subject matter. The workflow diagram may involve components of the localization system 500 such as the sensor client, the localization client, the C1 unit and the C2 unit.

The initiation phase 520 as described with reference to FIG. 5B may be provided. The local client may send (830) to the C1 unit a new primary pose estimate of the mobile device. The C1 unit may verify (831) based on state estimation (e.g., first state estimate) of the mobile device, if the error of the internal model exceeds the defined threshold. This process may for example involve the comparison between the first state estimate and the primary pose estimate. If the error of the internal model exceeds the defined threshold, the C1 unit may update (832) the internal model. The C1 unit may synchronize (833) the updated internal model with the C2 unit. The C2 unit may update (834) its internal model. FIG. 8B may provide an example implementation according to Case 4.

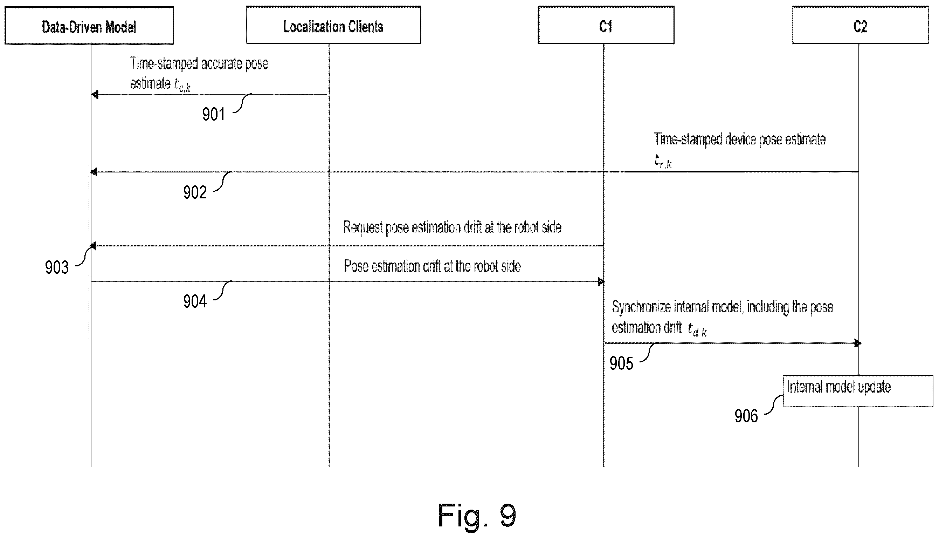

**FIG. 9** illustrates a workflow diagram detailing how the cloud-based localization system provides pose estimation drifts using a data driven model in accordance with an example of the present subject matter. The data driven model may receive (901) from the localization system the primary pose estimate and may receive (902) from the C2 unit the other secondary pose estimate determined by the C2 unit. The C1 unit may request (903) from the data driven model a pose estimation drift at the mobile device and may receive it (904) as an output of the data driven model from the data driven model. The triggering of the update of the first motion model may comprise sending (905) by the C1 unit the pose estimation drift to the C2 unit. The C2 unit may use the received pose estimation drift to update (906) the first motion model.

In **FIG. 10****,** a block circuit diagram illustrating a configuration of an apparatus 1070 is shown, wherein the apparatus 1070 is configured to implement at least part of the present subject matter. It is to be noted that the apparatus 1070 illustrated in FIG. 10 may comprise several further elements or functions besides those described herein below, which are omitted herein for the sake of simplicity as they are not essential for the understanding. Furthermore, the apparatus may be also another device having a similar function, such as a chipset, a chip, a module, etc., which can also be part of an apparatus or attached as a separate element to the apparatus 1070, or the like. The apparatus 1070 may comprise a processing function or processor 1071, such as a central processing unit (CPU) or the like, which executes instructions given by programs or the like related to a flow control mechanism. The processor 1071 may comprise one or more processing portions dedicated to specific processing as described below, or the processing may be run in a single processor. Portions for executing such specific processing may be also provided as discrete elements or within one or more further processors or processing portions, such as in one physical processor like a CPU or in several physical entities, for example. Reference sign 1072 denotes transceiver or input/output (I/O) units (interfaces) connected to the processor 1071. The I/O units 1072 may be used for communicating with one or more other network elements, entities, terminals or the like. The I/O units 1072 may be a combined unit comprising communication equipment towards several network elements or may comprise a distributed structure with a plurality of different interfaces for different network elements. Reference sign 1073 denotes a memory usable, for example, for storing data and programs to be executed by the processor 1071 and/or as a working storage of the processor 1071.

The processor 1071 is configured to execute processing related to the subject matter described throughout this disclosure. In particular, the apparatus 1070 may be configured to perform the method as described in reference to FIG. 2 or 3.

For example, the processor 1071 is configured for: using a first motion model of motion of a mobile device to determine a current state, referred to as a first state estimate, of the mobile device using a primary pose estimate of the mobile device, determining at least one of: a secondary pose estimate of the mobile device using first sensor measurements regarding the mobile device or a first reference state estimate of the mobile device using a reference motion model and the primary pose estimate, determining a first estimation error of the first state estimate using at least one of: the secondary pose estimate or the first reference state estimate, and based on the first estimation error: triggering an update of the primary pose estimate for using the updated primary pose estimate for a next execution of the first positioning operation.

As will be appreciated by one skilled in the art, aspects of the present invention may be embodied as an apparatus, method, computer program or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon. A computer program comprises the computer executable code or "program instructions".

Any combination of one or more computer readable medium(s) may be utilized. The computer readable medium may be a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the "C" programming language or similar programming languages and compiled into machine executable instructions. In some instances the computer executable code may be in the form of a high level language or in a pre-compiled form and be used in conjunction with an interpreter which generates the machine executable instructions on the fly.

Generally, the program instructions can be executed on one processor or on several processors. In the case of multiple processors, they can be distributed over several different entities. Each processor could execute a portion of the instructions intended for that entity. Thus, when referring to a system or process involving multiple entities, the computer program or program instructions are understood to be adapted to be executed by a processor associated or related to the respective entity.

## Claims

1. A system comprising an apparatus, referred to as first apparatus, the first apparatus comprising at least one processor; and at least one memory storing instructions that, when executed by the at least one processor, cause the first apparatus to perform a first positioning operation comprising:
use a first motion model of motion of a mobile device to determine a current state, referred to as a first state estimate, of the mobile device using a primary pose estimate of the mobile device;
determine at least one of: a secondary pose estimate of the mobile device using first sensor measurements regarding the mobile device or a first reference state estimate of the mobile device using a reference motion model and the primary pose estimate;
determine a first estimation error of the first state estimate using at least one of: the secondary pose estimate or the first reference state estimate; and
based on the first estimation error: trigger an update of the primary pose estimate for using the updated primary pose estimate for a next execution of the first positioning operation.

2. The system of claim 1, wherein the instructions, when executed by the at least one processor, further cause the first apparatus to repeatedly perform the first positioning operation.

3. The system of any of the preceding claims, the first motion model being adapted for using a first control input of the mobile device for the determination of the first state estimate, the reference motion model being adapted for using a second control input of the mobile device for the determination of the first reference state estimate, wherein the first control input is different from the second control input.

4. The system of any of the preceding claims, further comprising a second apparatus, the second apparatus comprising at least one processor; and at least one memory storing instructions that, when executed by the at least one processor of the second apparatus, cause the second apparatus to perform a second positioning operation comprising:
use the first motion model to determine a second state estimate using a primary pose estimate of the mobile device;
determine at least one of: another secondary pose estimate of the mobile device using second sensor measurements regarding the mobile device or a second reference state estimate of the mobile device using the reference motion model and the primary pose estimate;
determine a second estimation error on the second state estimate using at least one of: the other secondary pose estimate or the second reference state estimate; and
based on the second estimation error: trigger an update of the primary pose estimate for using the updated primary pose estimate for a next execution of the first positioning operation or the second positioning operation.

5. The system of claim 4, wherein the instructions, when executed by the at least one processor, further cause the second apparatus to repeatedly perform the second positioning operation.

6. The system of any of the preceding claims 4 to 5, wherein the instructions, when executed by the at least one processor, further cause the first apparatus to: determine whether the primary pose estimate matches the first state estimate; in response to determining that the primary pose estimate does not match the first state estimate provide the primary pose estimate to the second apparatus.

7. The system of any of the preceding claims 4 to 6, wherein the instructions, when executed by the at least one processor, further cause the first apparatus to: determine whether the primary pose estimate matches the other secondary pose estimate using a data driven model; in response to determining that the primary pose estimate does not match the other secondary pose estimate, provide a drift between the primary pose estimate and the other secondary pose estimate provided by the data driven model to the second apparatus, thereby triggering an update of the other secondary pose estimate using the drift.

8. The system of any of the preceding claims 4 to 7, the first sensor measurements being different from the second sensor measurements, wherein the first sensor measurements comprise external sensor measurements, and the second sensor measurements comprise odometry measurements.

9. The system of any of the preceding claims 4 to 8, the first apparatus being configured to be remotely connected to the second apparatus; or the first apparatus being configured to be collocated with the second apparatus.

10. The system of any of the preceding claims 4 to 9, further comprising a sensing system for acquiring sensor data from the mobile device and a localization system being configured to determine the primary pose estimate using the sensor data and provide the primary pose estimate to the first apparatus, and optionally to the second apparatus or to the mobile device to plan and control motion of the mobile device, the first apparatus being comprised by the localization system, and the second apparatus being comprised by the sensing system.

11. The system of claim 10, wherein the primary pose estimate is determined by correcting an initial primary pose estimate that is estimated using the sensor data, wherein the correction is performed using a velocity of the mobile device and at least a transfer delay of the sensor data between the sensing system and the localization system.

12. The system of claim 10 or 11, wherein triggering the update of the primary pose estimate comprises controlling the sensing system to provide current sensor data to the localization system.

13. The system of any of the preceding claims 4 to 12, wherein the instructions, when executed by the at least one processor of the second apparatus, further cause the second apparatus to: synchronize the updated primary pose estimate with the first apparatus or wherein the instructions, when executed by the at least one processor, further cause the first apparatus to: synchronize the updated primary pose estimate with the second apparatus.

14. A method comprising
using a first motion model of motion of a mobile device to determine a current state, referred to as a first state estimate, of the mobile device using a primary pose estimate of the mobile device;
determining at least one of: a secondary pose estimate of the mobile device using first sensor measurements or a first reference state estimate using a reference motion model and the primary pose estimate;
determining a first estimation error of the first state estimate using at least one of: the secondary pose estimate or the first reference state estimate; and
based on the first estimation error: triggering an update of the primary pose estimate for using the updated primary pose estimate for a next execution of the method.

15. A computer program product comprising processor executable instructions for causing an apparatus for performing the method of claim 14.
